# EUROPEAN PATENT APPLICATION

(11) **EP 1 995 919 A1**
(43) Date of publication of application: **26.11.2008**
(21) Application number: 07737393.4
(22) Date of filing: 26.02.2007
(51) Int. Cl.: H04L 12/56, G06F 13/00, H04M 11/00, H04Q 7/38

(54) **CONNECTOR FOR COMMUNICATION DEVICE**

(30) Priority: 10.03.2006 JP 2006065688
(71) Applicant: Sanden Corporation, Isesaki-shi, Gunma 372-8502 (JP)
(72) Inventor: NAKAJIMA, Kazuya, Isesaki-shi Gunma 3728502 (JP)
(74) Representative: Haley, Stephen
(86) International application number: PCT/JP2007/053541
(87) International publication number: WO 2007/105475

(57) **Abstract**

A communication equipment connection adapter 1 for connecting a host device 10 to communication modules 21, 22, and 23 generates a replica of communication data between the host device 10 and a first communication partner 41, and accumulates the communication data in a communication data storage unit 152a. When the communication with the first communication partner 41 is completed, the connection adapter 1 is connected to the second communication partner 51. Then, the communication data stored in the communication data storage unit 152a is transmitted to the second communication partner 51.

## Description

### Technical field

The present invention relates to the field of telemetering used in such purposes as the collection of sales information from vending machines and to the field of telematics used in delivering traffic information to mobile objects and like purposes.

### Background art

Recently, telemetring and telematics for collecting and distributing information over a wireless packet communication network have become widespread. The telemetring originally refers to a system of reading a measured value by a measure via a communication line. However, it has been generally used as a term indicating not only reading data but also monitoring the operation of equipment and performing remote control. A typical example of telemetring can be a sales management system of a vending machine, a use amount management system of a gas, water supply, etc., a management system in a parking lot without humans in attendance, etc. For a sales management system of a vending machine, refer to the patent document 1. The telematics refers to providing information service in real time by combining a mobile object such as an automobile with a communication system. A typical example of telematics can be a vehicle-mounted information system etc. for providing in real time a terminal provided for a vehicle with traffic information and navigation information.

In the fields above, communication equipment for connection to a wireless packet communication network in a remote location and a host device to the communication equipment are arranged. The host device corresponds to data terminal equipment. The communication equipment corresponds to data circuit-terminating equipment.

For example, in the sales management system of a vending machine, the control device for controlling the sales and the temperature in the machine correspond to the host device. Each host device is periodically or arbitrarily connected to a predetermined network through communication equipment, and to a predetermined managing computer over the network. The host device connected to the managing computer transmits various types of data to be managed.

Patent Document 1: Japanese Patent Publication 2003-51056

### Disclosure of the Invention

### Problems to be solved by the invention

In the conventional system, the data to be managed is collected to a predetermined managing computer from each host device as described above, and there has been a request to receive by other computers the data to be managed. The request has been made to, for example, back up the data to be managed, and store the data as a managing log in another system designing corporation etc. other than an administrator of the managing computer.

However, in the conventional host device, since various information for connection to a predetermined managing computer, for example, a telephone number, an IP address, etc., has been fixedly incorporated and set, it has been difficult to transmit data to a computer other than a preset managing computer.

The present invention has been developed to solve the above-mentioned problems, and aims at providing a connection adapter for communication device capable of transmitting data to a computer other than a predetermined managing computer.

### Means for solving the problems

To attain the above-mentioned advantages of the present invention, the present application proposes a connection adapter for communication device including: a first interface for connection to communication equipment for a network connection service; a second interface for connection to a host device for performing communications using the communication equipment; a communication control unit for relaying the communications performed by the host device using the communication equipment; and storage means for storing communication data. With the configuration, the communication control unit (a) stores data of the communications between the host device and a first communication partner in the storage means, (b) makes a connection to a second communication partner after the communications between the host device and the first communication partner are completed, and (c) transmits all or a part of the communication data stored in the storage means to the second communication partner.

According to the present invention, when the communication between the host device and the computer of the first communication partner is completed through the connection adapter and the communication equipment, the replica of communication data is transmitted to the computer of the second communication partner. Thus, the communication data can also be managed by the computer of the second communication partner, thereby utilizing the communication data in making backup data and performing a log analysis.

The host device corresponds to data terminal equipment (DTE). Also, the communication equipment corresponds to data circuit-terminating equipment (DCE).

As an example of a preferred aspect of the present invention, the communication control unit in the present application disconnects a network connection established during communications with the first communication partner after the communications with the first communication partner are completed, and establishes a network connection for communications with the second communication partner.

In the present invention, the network connection for use in the communications with the first communication partner and the network connection for use in the communications with the second communication partner can be configured using different carriers and in different network contract modes. Therefore, the present invention excels in flexibility of configuring a system.

In addition, as an example of another preferred aspect of the present invention, the communication control unit of the present application makes a connection to the second communication partner after the communications with the first communication partner are completed with the network connection established during the communications with the first communication partner maintained as is.

Since both the communications with the first communication partner and the communications with the second communication partner are performed using a common network connection in the present invention, the time required in making the network connection can be shortened and the necessary communication cost can be reduced.

### Advantages of the invention

As described above, according to the present invention, when communications between the host device and the computer of the first communication partner through the connection adapter and communication equipment are completed, the replica of the communication data is transmitted to the computer of the second communication partner. Thus, also the computer of the second communication partner can manage the communication data, thereby successfully utilizing the communication data in making backup data and performing a log analysis.

### Brief description of the drawings

Figure 1 shows the configuration of the network of the system using the connection adapter for communication device;
Figure 2 shows the configuration of the connection adapter;
Figure 3 is a block diagram of the function of the main control unit;
Figure 4 shows an example of the data stored in the converted data storage unit;
Figure 5 is an explanatory view of the sequence of issuing a call on the host device side when the first wireless packet communication network is used;
Figure 6 is an explanatory view of the sequence of issuing a call on the host device side when the second wireless packet communication network is used;
Figure 7 is an explanatory view of the sequence of issuing a call on the host device side when the second wireless packet communication network is used;
Figure 8 is an explanatory view of an address converting process;
Figure 9 is an explanatory view of the sequence of the process of transmitting copied data when the first wireless packet communication network is used;
Figure 10 is an explanatory view of the sequence of the process of transmitting copied data when the second wireless packet communication network is used;
Figure 11 shows the configuration of the network of the system according to the second embodiment of the present invention;
Figure 12 is an explanatory view of an example of an address conversion table;
Figure 13 is an explanatory view of the sequence of issuing a call on the host device side when the second wireless packet communication network is used; and
Figure 14 is an explanatory view of an address converting process.

### Description of symbols

1 connection adapter
21, 22, 23 communication module
31, 32, 33 wireless packet communication network
32c address management server
40 in-house LAN
120 main control unit
121 line control unit
122 communication control unit
152a communication data storage unit

### Best mode for carrying out the invention

### (First Embodiment)

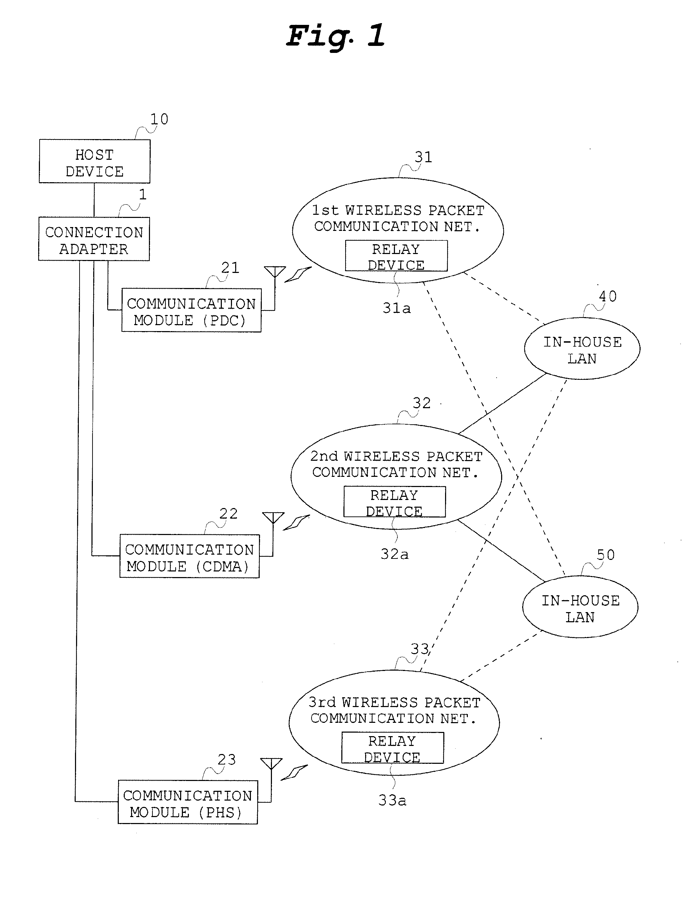

A connection adapter for communication device according to a first embodiment of the present invention is described below with reference to the attached drawings. Figure 1 shows the configuration of the network of the system using the connection adapter for communication device according to the present embodiment.

A connection adapter 1 connects plural types of host devices 10 to communication equipment 21, 22, and 23. In the present embodiment, the connection adapter 1 corresponds to a communication module 21 in accordance with the PDC standard, a communication module 22 in accordance with the CDMA standard, and a communication module 23 in accordance with the PHS standard. Each of the communication modules 21, 22, and 23 are communication equipment connected to wireless packet communication networks 31, 32, and 33 established by the corresponding carriers, and correspond to the communication standards and communication protocol services uniquely set by the respectively carriers. The host device 10 is designed to correspond to specific carriers and the services provided by the carriers. Practically, it is designed to be connected to a communication module corresponding to the service, and correspond to the connection protocol, authentication protocol, etc. corresponding to the service.

According to the present embodiment, the wireless packet communication networks 31, 32, and 33 are assumed to provide the following services. Described below are the services.

In the network connection service in the first and third wireless packet communication networks 31 and 33, telephone numbers are assigned to the communication modules 21 and 23 in advance by a carrier. The wireless packet communication networks 31 and 33 is respectively provided with the relay devices 31a and 33a for line control, packet relay, etc. The relay devices 31a and 33a are assigned telephone numbers corresponding to in-house LANs 40 and 50 as connection destination networks. The terminals to which the communication modules 21 and 23 are connected are connected to a predetermined network such as the in-house LANs 40 and 50, etc. by issuing a call to the telephone numbers of the relay devices 31a and 33a in the respective wireless packet communication networks 31 and 33. The connections to the relay devices 31a and 33a are allowed only from the communication modules 21 and 23 assigned telephone numbers in advance. An IP address group is assigned in a predetermined range from a carrier, and a fixed IP address included in the IP address group is assigned to each terminal connected to each of the communication modules 21 and 23. The relay devices 31a and 33a relay only the packets transmitted and received in the IP address group.

In the network connection service in the second wireless packet communication network 32, a telephone number is assigned to the communication module 22 in advance by a carrier. In the second wireless packet communication network 32, a relay device 32a for line control, packet relay, etc. is provided. A terminal to which the communication module 22 is connected is connected to the second wireless packet communication network 32 by issuing a call with a predetermined specific number specified. The terminal can be connected to the in-house LANs 40 and 50 as a connection destination network by performing an authenticating process using a PAP (password authentication protocol) as a type of authentication protocol between the terminal and the relay device 32a. In the PAP authentication, a connection destination network is designated by including in a user name the information for designation of a connection destination. From a carrier, an IP address group in a predetermined range is assigned, and an IP address included in the IP address group is dynamically assigned by the IPCP (Internet protocol control protocol) to each terminal connected to the communication module 22.

The host device 10 corresponds to a data terminal equipment (DTE). It is assumed that the host device 10 according to the present embodiment can be directly connected to the communication module 21 in accordance with the PDC standard and the communication module 23 in accordance with the PHS standard. Then, it is assumed that the host device 10 can be connected to a first communication partner 41 in the in-house LAN 40 through the wireless packet communication network 31 or 33 using the communication module 21 or 23. The connection adapter 1 according to the present embodiment enables the host device 10 to be connected to the first communication partner 41 in the in-house LAN 40 through the second wireless packet communication network 32 using the communication module 22 in accordance with the CDMA standard without reforming or changing the host device 10. The connection adapter 1 generates a replica of communication data between the host device 10 and the first communication partner 41, and transmits the communication data to a second communication partner 51 in the in-house LAN 50.

In the case of the management system of a vending machine as a typical operation example, the control device of the vending machine corresponding to the host device can be directly connected to the communication module 21 in accordance with the PDC standard. The control device is set to transmit sales data etc. to the first communication partner 41 in the in-house LAN 40 through the first wireless packet communication network 31 periodically or at any time. The first communication partner 41 corresponds to the managing computer for centrally managing a vending machine. The connection adapter 1 realizes the following two functions. That is, (1) communications through other wireless packet communication networks 32 and 33 can be performed without changing a vending machine, a managing computer, etc., and (2) the replica of the communication data between the control device and the managing computer is transmitted also to other managing computers. In the present embodiment, other managing computers correspond to the second communication partner 51 of the in-house LAN 50. The connection adapter 1 is described in detail.

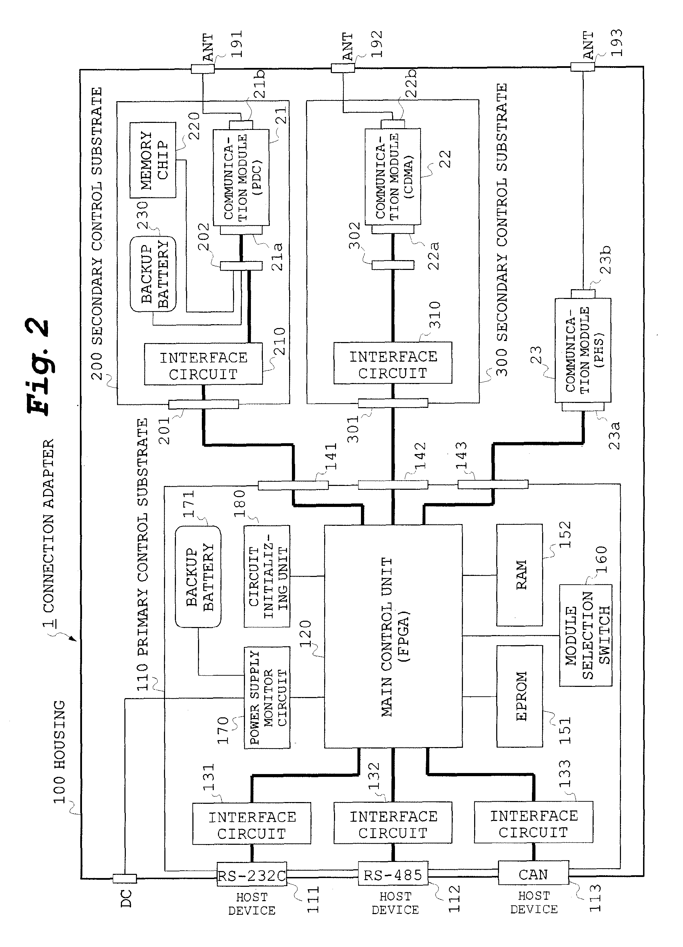

First, the configuration of the connection adapter 1 according to the present embodiment is described with reference to Figure 2. Figure 2 shows the state including the three communication modules 21, 22, and 23 in the connection adapter 1. During the operation, at least only the communication module 21, 22, or 23 to be actually used can be included.

The connection adapter 1 connects plural types of host devices 10 corresponding to a data terminal equipment (DTE) to plural types of communication equipment 20, 25, and 26 corresponding to the data circuit-terminating equipment (DCE) as the plural types of host device 10. As shown in Figure 2, the connection adapter 1 includes in a housing 100 a primary control substrate 110, a secondary control substrate 200 for loading the communication module 21 in accordance with the PDC standard, a secondary control substrate 300 for loading the communication module 22 in accordance with the CDMA standard, and the communication module 23 in accordance with the PHS standard. The secondary control substrates 200 and 300 and the communication module 23 are provided as freely attachable to and detachable from the primary control substrate 110.

The connection adapter 1 according to the present embodiment is provided with plural types of connectors for connection to the host device for connection to plural types of main control units. Practically, the primary control substrate 110 is provided with a connector 111 used in accordance with the RS-232C standard, a connector 112 used in accordance with the RS-485 standard, and a connector 113 used in accordance with the CAN (controller area network) standard.

A primary control substrate 110 is provided with a main control unit 120 implemented by an FPGA (field programmable gate array) as a type of PLD (programmable logic device), an interface circuit 131 in accordance with the RS-232C standard, an interface circuit 132 in accordance with the RS-485 standard, and an interface circuit 133 in accordance with the CAN standard. Each of the interface circuits 131, 132, and 133 is interposed between the connectors 111, 112, and 113 and the main control unit 120. Thus, the main control unit 120 can communicate with the host device connected to the connectors 111, 112, and 113 through each of the interface circuits 131, 132, and 133.

The primary control substrate 110 includes a connector 141 for connection with the secondary control substrate 200, a connector 142 for connection with the secondary control substrate 300, and a connector 143 for connection with the communication module 23 in accordance with the PHS standard. Each of the connectors 141, 142, and 143 is connected to the main control unit 120. Thus, the main control unit 120 can communicate with the communication module 21 in accordance with the PDC standard through the secondary control substrate 200. Similarly, the main control unit 120 can communicate with the communication module 22 in accordance with the CDMA standard through the secondary control substrate 300. The main control unit can communicate directly with the communication module 23 in accordance with the PHS standard.

Furthermore, the primary control substrate 110 is provided with EPROM 151 storing a control program of the main control unit 120, and RAM 152 for use as various work area of the main control unit 120. Additionally, the primary control substrate 110 is provided with a module selection switch 160 for selection of the communication module 21, 22, or 23. The main control unit 120 performs an operation corresponding to the communication modules 21, 22, and 23 selected by the module selection switch 160. The configuration and the operation of the main control unit 120 are described later.

The primary control substrate 110 operates by external DC power supply. In addition, the primary control substrate 110 directly supplies DC power to the secondary control substrates 200 and 300, and the communication module 23 of the PHS standard through each of the connectors 141, 142, and 143. The primary control substrate 110 is provided with a power supply monitor circuit 170 for monitoring external abnormal supply of DC power, and a backup battery 171. When the power supply monitor circuit 170 detects external abnormal power supply, the circuit controls power supply from the backup battery 171 to the primary control substrate 110, the secondary control substrates 200 and 300, and the communication module 23 in accordance with the PHS. In addition, when the power supply monitor circuit 170 detects external abnormal power supply, it notifies the main control unit 120 of the abnormal power supply. Furthermore, when the power supply monitor circuit 170 detects the recovery of external power supply after abnormal power supply, it notifies the main control unit 120 of the recovery.

In addition, the primary control substrate 110 is provided with a circuit initializing unit 180 for initializing and generating the internal circuit of the main control unit 120 implemented by the FPGA. The circuit initializing unit 180 contains a program for initializing and generating an internal circuit of the main control unit 120. The circuit initializing unit 180 forms a circuit configuring the main control unit 120 in the FPGA at an instruction from an externally connected terminal (not shown in the drawings).

The secondary control substrate 200 is to connect the primary control substrate 110 to the communication module 21 in accordance with the PDC standard. The secondary control substrate 200 is provided with a connector 201 for connection to the primary control substrate 110, a connector 202 for connection to a terminal 21a of the communication module 21 in accordance with the PDC standard, and an interface circuit 210 for connection between the primary control substrate 110 and the communication module 21. The interface circuit 210 converts the number of pins between the connector 202 and the connector 201, converts the assignment of pins, forms a waveform, etc. The communication module 21 according to the present embodiment requires a predetermined memory chip storing its own telephone number information etc., and requires a dedicated backup battery. Correspondingly, the memory chip 220 and the backup battery 230 are connected to the communication module 21 of the secondary control substrate 200 through the connector 202. The secondary control substrate 200 is operated by a DC power supply from the primary control substrate 110 as described above, and DC power is supplied to the communication module 21 through the connector 202. An antenna connection terminal 21b of the communication module 21 is connected to an antenna connection terminal 191 provided for the housing 100.

The secondary control substrate 300 is to connect the primary control substrate 110 to the communication module 22 in accordance with the CDMA standard. The secondary control substrate 300 is provided with a connector 301 for connection to the primary control substrate 110, a connector 302 for connection to a terminal 22a of the communication module 22 in accordance with the CDMA standard, and an interface circuit 310 for connection of the primary control substrate 110 to the communication module 22. The interface circuit 310 converts the number of pins between the connector 302 and the connector 301, converts the assignment of pins, generates a waveform, etc. In addition, the secondary control substrate 300 is operated by the DC power supply from the primary control substrate 110 as described above, and supplies DC power to the communication module 22 through the connector 302. An antenna connection terminal 22b of the communication module 22 is connected to an antenna connection terminal 192 provided for the housing 100.

A terminal 23a of the communication module 23 in accordance with the PHS standard is connected to the connector 143 of the primary control substrate 110. An antenna connection terminal 23b of the communication module 23 is connected to an antenna connection terminal 193 attached to a housing 100.

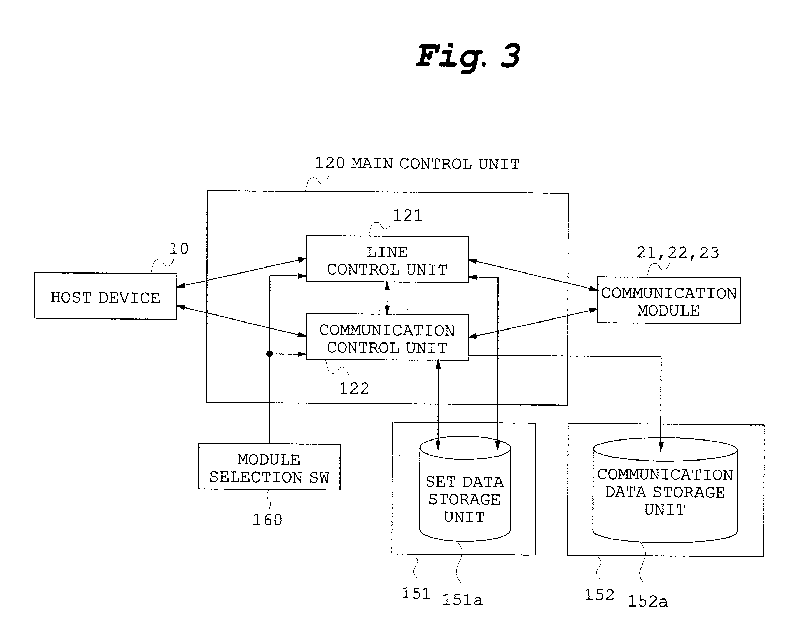

Next, the configuration and the operation of the main control unit 120 are described below with reference to Figure 3. Figure 3 is a block diagram showing the configuration of the main control unit 120. Only the components related to the gist of the present invention are described, but others are omitted.

As shown in Figure 3, the main control unit 120 includes a line control unit 121 for controlling the line such as establishing a line connection etc., and a communication control unit 122 for controlling data communication on the line established by the line control unit 121. The line control unit 121 controls line connection by an AT command, and controls connection of an IP layer by the LCP (link control protocol) and the IPCP. The communication control unit 122 performs a converting process of an IP address included in the header of the IP layer in the data communication on the line established by the line control unit 121, a process of transmitting a replica of communication data, etc.

The line control unit 121 and the communication control unit 122 switches the process depending on the communication modules 21, 22, and 23 selected by a module selection switch 160. In the present embodiment, the host device 10 is designed to directly connect the communication modules 21 and 23 for use. Therefore, when the communication module 21 or 23 is selected by the module selection switch 160, the line control unit 121 and the communication control unit 122 do not perform a special process on the data between the host device 10 and the communication module 21 or 23, but only pass the data. On the other hand, when the communication module 22 is selected, the line control unit 121 and the communication control unit 122 perform a line control process etc. on data between the host device 10 and the communication module 22 according to a predetermined rule. The data required for the data processing is stored in a set data storage unit 151a of the EPROM 151. The replica of communication data generated and transmitted by the communication control unit 122 is stored in the communication data storage unit 152a of the RAM 152.

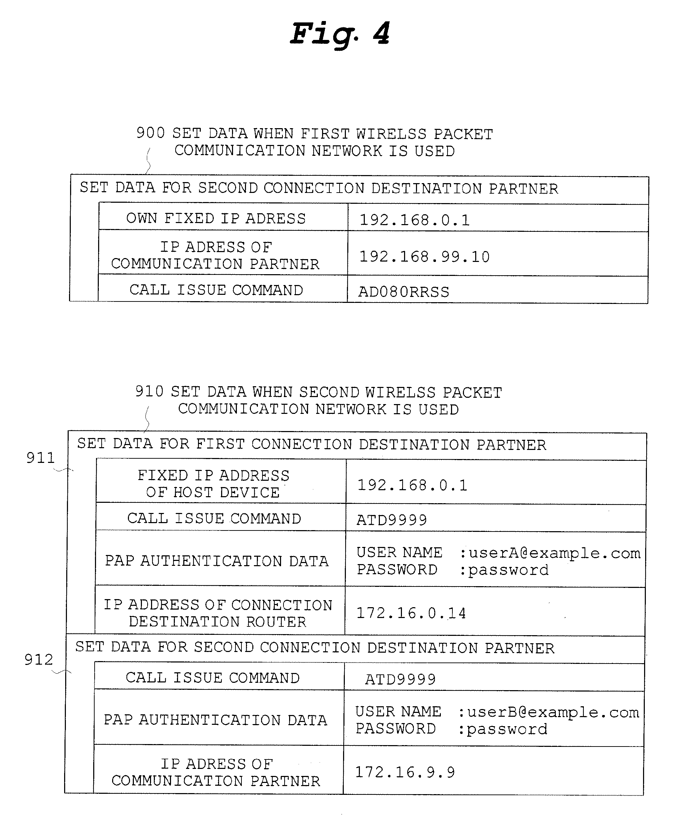

The data stored in the set data storage unit 151a is described below with reference to Figure 4. The set data storage unit 151a stores (1) setting information 900 when the first wireless packet communication network 31 is used, and (2) setting information 910 when the second wireless packet communication network 32 is used. The setting information 900 is required for the communication between the connection adapter 1 and the second communication partner 51 through the first wireless packet communication network 31. Practically, the setting information 900 includes the fixed IP address of the connection adapter 1, the fixed IP address of the second communication partner 51 and a call issue command (including a telephone number) assigned in advance from a carrier.

On the other hand, the setting information 910 includes (2a) setting information 911 required for the communication between the host device 10 and a first communication partner 41 through the second wireless packet communication network 32, and (2b) setting information 912 required for the communication between the connection adapter 1 and the second communication partner 51 through the second wireless packet communication network 32. Practically, the setting information 911 includes a call issue command (including a telephone number) for connection to the second wireless packet communication network 32, the fixed IP address of the host device 10, the authentication data required when a connection is made to the in-house LAN 40 through the second wireless packet communication network 32, and the IP address of the first connection destination router 43. The setting information 912 includes a call issue command (including a telephone number) for connection to the second wireless packet communication network 32, the authentication data required for connection to the in-house LAN 50 through the second wireless packet communication network 32, and the IP address of the second communication partner 51. A first connection destination router 43 is a relay device corresponding to the connection point between the second wireless packet communication network 32 and the in-house LAN 40. The first connection destination router 43 has the function of controlling a line corresponding to the connection adapter 1 and the function of converting an address.

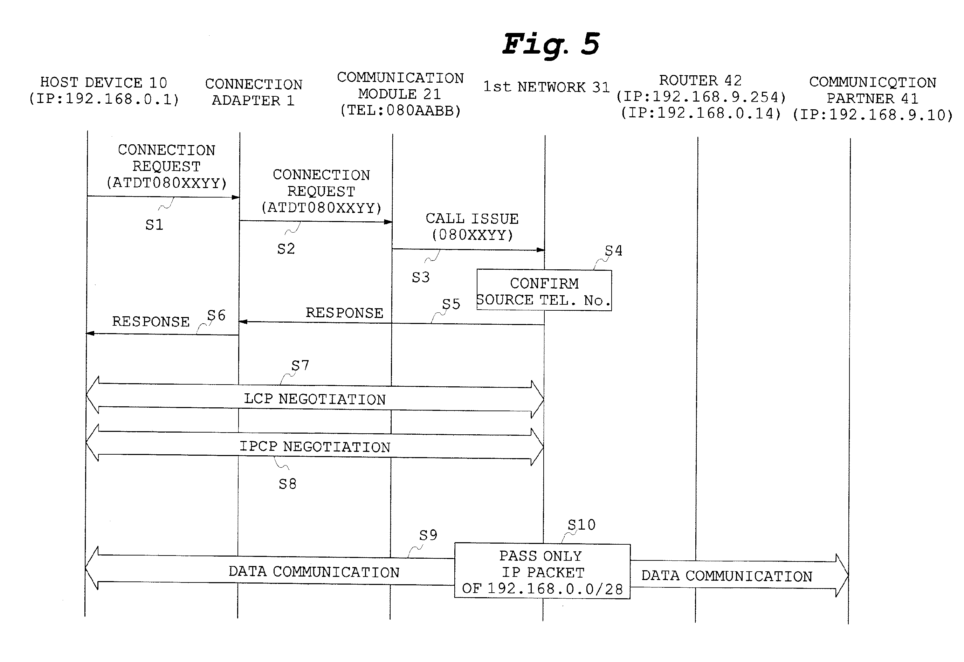

Next, the operation of the connection adapter 1 according to the present embodiment is described below with reference to the attached drawings. First, the case in which the host device 10 is connected to the in-house LAN 40 through the first wireless packet communication network 31 is described with reference to the sequence chart shown in Figure 5. As described above, since the host device 10 corresponds to the communication module 21 in accordance with the PDC standard and the first wireless packet communication network 31, the connection adapter 1 performs no process on the data between the host device 10 and the communication module 21. Similar operations are performed when the host device 10 is connected to the in-house LAN 40 through the third wireless packet communication network 33.

In this example, the following contents are presumed. That is, assume that the telephone number '080AABB' is assigned to the communication module 21 from the carrier. Assume that an IP address of 192.168.0.0/28 is distributed from the carrier, and the IP address 192.168.0.1 is assigned to the host device 10 connected to the first wireless packet communication network 31 using the communication module 21. Assume that the communication partner 41 of the host device 10 is in the in-house LAN 40, and its IP address is 192.168.9.10. The communication module 21 is assumed to be connected to the relay device of the first wireless packet communication network 21 by issuing a call at an 'ATDT' command to the telephone number '080XXYY'.

As shown in Figure 5, when the host device 10 issues an 'ATDT080XXYY' command to the connection adapter 1 (step S1), the line control unit 121 of the connection adapter 1 transfers the command to the communication module 21 as it is (step S2). The trigger of the issue of the call can be the time when an IP packet of the destination address: 192.168.0.10 is generated in the host device 10. At the AT command, the communication module 21 issues a call to the relay device in the first wireless packet communication network 31 (step S3). The relay device confirms the source telephone number of the communication module 21, and rejects the connection from the terminal without a contract (step S4). Upon receipt of the response 'CONNECT' indicating that a connection is completed at the circuit level through the communication module 21 (step S5), the line control unit 121 of the connection adapter 1 transfers the response to the host device 10 (step S6).

Next, the host device 10 starts the process to make a connection to the in-house LAN 40 through the first wireless packet communication network 31 by the PPP. Practically, a connection to the relay device of the first wireless packet communication network 31 is established at the IP level through the LCP and the IPCP (step S7 and S8). The line control unit 121 of the connection adapter 1 bidirectionally passes the packet relating to the LCP and the IPCP. Thus, the host device 10 can communicate with the in-house LAN 40 at the IP level. Therefore, the data communication using an upper protocol such as TCP/UDP etc. can be performed between them (step S9). The relay device of the first wireless packet communication network 31 relays only the IP packet whose address or the source IP address is included in the 192.168.0.0/28 (step S10).

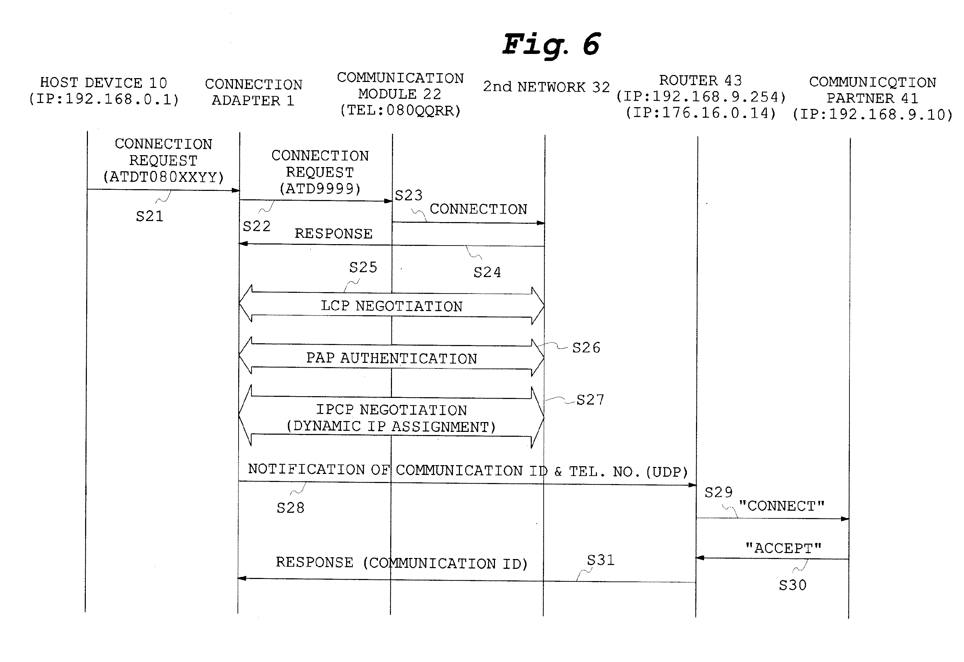

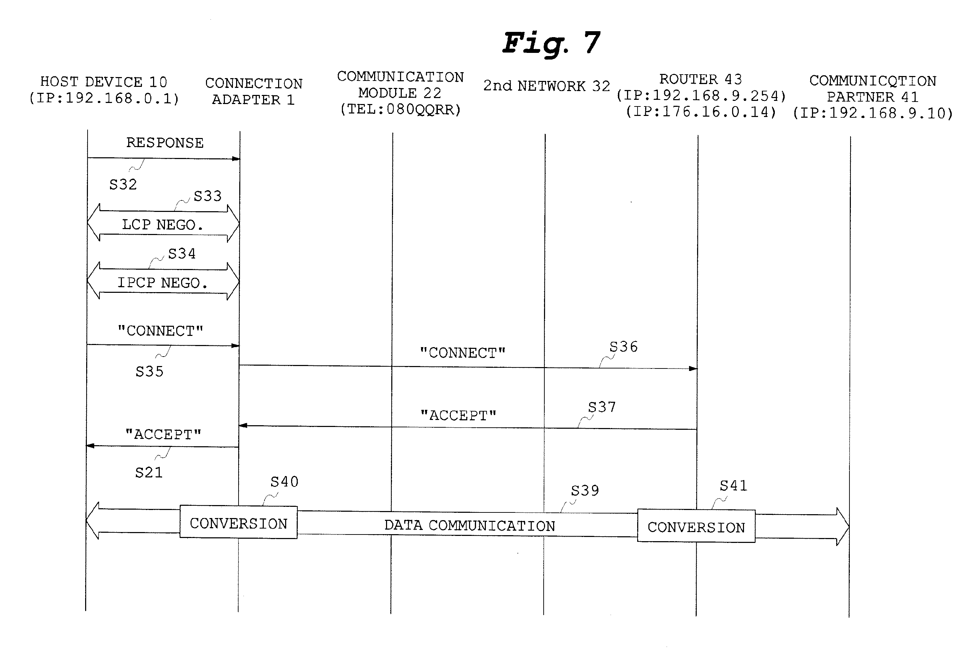

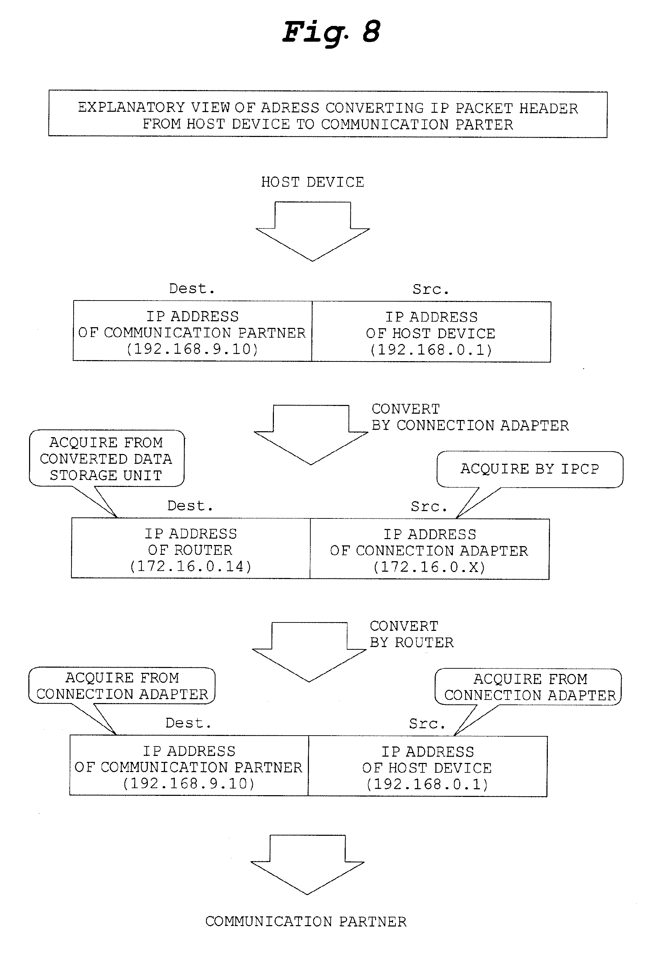

Next, the case in which a connection is made to the in-house LAN 40 using the communication module 22 in accordance with the CDMA standard and the second wireless packet communication network 32 without reforming or changing the host device 10 is described below with reference to Figures 6 to 8. Figures 6 and 7 are sequence charts of the case in which the second wireless packet communication network is used. Figure 8 is an explanatory view of the process of converting an IP address described in the header of the IP packet transmitted from the host device.

The following descriptions are assumed. That is, assume that the communication module 22 is assigned the telephone number of '080QQRR' from a carrier. Also assume that the IP address of 172.16.0.0/28 is distributed from the carrier, and the host device 10 connected to the first wireless packet communication network 32 is dynamically assigned one of the IP address 172.16.0.0/28 using the communication module 22. In addition, assume that the connection destination router 43 corresponding to the connection point of the second wireless packet communication network 32 and the in-house LAN 40 is assigned the address of 172.16.0.14. It is assumed that the communication partner 41 of the host device 10 is in the in-house LAN 40, and its IP address is 192.168.9.10. The communication module 22 is connected to the relay device of the second wireless packet communication network 32 by issuing an 'ATD9999' command. The relay device authenticates a user by the PAP and designates a connection destination (in-house LAN 40 in the present embodiment).

As shown in Figure 6, when the host device 10 issues an 'ATDT080XXYY' command to the connection adapter 1 (step S21), the line control unit 121 of the connection adapter 1 converts the command into 'ATD9999', and transfers it to the communication module 22 (step S22). The trigger of the issue of the command is the time when the IP packet addressed to 192.168.9.10 as shown in Figure 8 is generated, etc. At the AT command, the communication module 22 issues a call to the relay device 32a in the second wireless packet communication network 32 (step S23). Upon receipt of the response 'CONNECT' indicating that the connection has been completed at the line level through the communication module 22 (step S24), the line control unit 121 of the connection adapter 1 starts the process of connecting the connection adapter 1 to the in-house LAN 40 through the PPP.

First, the line control unit 121 of the connection adapter 1 starts an LCP negotiation with the relay device 32a of the second wireless packet communication network 32 (step S25). Next, the line control unit 121 of the connection adapter 1 performs a PAP authenticating process with the relay device 32a of the second wireless packet communication network 32 (step S26). The PAP authenticating process is not conceived by the host device 10 generated for the first wireless packet communication network 30. However, it is required when the second wireless packet communication network 32 is used. Therefore, in the present embodiment, the connection adapter 1 performs the authenticating process for the host device 10. When the authenticating process is completed, the line control unit 121 of the connection adapter 1 starts an IPCP negotiation between the connection adapter 1 and the relay device 32a of the second wireless packet communication network 32 (step S27). Thus, the IPCP negotiation is completed, and a dynamic IP address 172.16.0.X is assigned from the second wireless packet communication network 32 to the line control unit 121 of the connection adapter 1. The assigned dynamic IP address is stored in the storage means such as the RAM 152.

When the PPP negotiation is completed, the line control unit 121 of the connection adapter 1 notifies the connection destination router 43 of the telephone number of the communication module 22 and a communication ID having a special value (for example, 0) indicating a call issued from the host device 10 by an UDP packet (step S28). Upon receipt of the notification from the connection adapter 1, the connection destination 43 transmits the connection request 'CONNECT' in the IP layer to the first communication partner 41 (step S29). At this time, the source IP address of the IP packet is the fixed IP address of the host device 10. That is, the packet relating to the connection request is obtained by prefetching the connection request issued from the host device 10 in the processes in steps S35 to S38 at the subsequent stage.

Upon receipt of the response 'ACCEPT' to the connection request (step S30), the connection destination router 43 transmits a response including a communication ID to the connection adapter 1 as a response in step S28 (step S41). The destination IP address of the response received from the first communication partner 41 is a fixed IP address of the host device 10. However, the connection destination router 43 does not relay the packet to the second wireless packet communication network 32 at this stage.

After receiving a response from the connection destination router 43, the line control unit 121 of the connection adapter 1 transmits a response 'CONNECT' indicating that the connection has been completed at the line level to the host device 10 (step S32). Upon receipt of the response, the host device 10 starts the LCP negotiation and the IPCP negotiation (steps S33 and S34). A point to note here is that the line control unit 121 of the connection adapter 1 transmits a response to the host device 10. Thus, the host device 10 views the connecting process as being performed with the first wireless packet communication network 31 described above with reference to Figure 5.

In the process above, the communication at the IP level can be performed between the host device 10 and the connection adapter 1, and between the connection adapter 1 and the communication partner 41. Thus, the host device 10 transmits a connection request 'CONNECT' in the IP layer to the communication partner 41 (step S35). The connection request corresponds to the first packet of the data communication in step S9 shown in Figure 5. Therefore, the destination IP address is the IP address of the communication partner 41, and the source IP address is the fixed terminal IP address of the host device 10. Upon receipt of the connection request, the line control unit 121 of the connection adapter 1 converts the destination IP address into the WAN side IP address of the connection destination router 43, converts the source IP address into the dynamic terminal IP address assigned by the second wireless packet communication network 32, and transmits it to the connection destination router 43 (step S36). The connection destination router 43 transmits a response to the connection adapter 1 in response to the connection request (step S37). After receiving the response, the line control unit 121 of the connection adapter 1 converts the destination IP address into the fixed terminal IP address of the host device 10, converts the source IP address into the IP address of the communication partner 41, and transfers the result to the host device 10 (step S38).

After the process above, the host device 10 determines that the connection to the communication partner 41 has been completed, and starts the data communication to the communication partner 41 (step S39). The connection destination router 43 and the communication control unit 122 of the connection adapter 1 perform an address conversion on the header of the IP packet (steps S40, S41). Practically, as shown in Figure 8, the fixed terminal IP address (192.168.0.1) and the dynamic terminal IP address (172.16.0.X) are mutually converted, and the WAN side IP address (172.16.0.14) of the connection destination router 43 and the IP address (192.168.9.10) of the communication partner 41 are mutually converted. After the process above, communications can be started from the host device 10 with the communication partner 41.

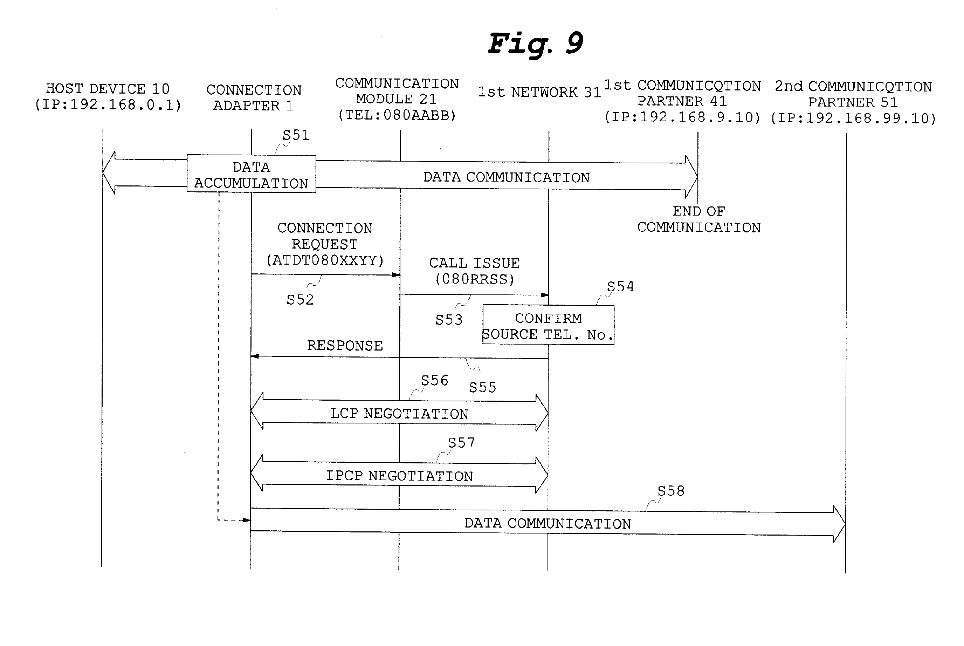

Next, the replica and the transmission of communication data by the connection adapter 1 are described below with reference to the attached drawings. First, the transmission of the replica of the communication data to the second communication partner 51 after the communication between the host device 10 and the communication partner 41 is described with reference to the sequence chart shown in Figure 9.

The communication control unit 122 of the connection adapter 1 accumulates communication data in the communication data storage unit 152a (step S51) while relaying the communication data between the host device 10 and the communication partner 41 (step S9 shown in Figure 5).

Assume that the communication between the host device 10 and the communication partner 41 has been completed. Upon receipt of the completion, the line between the communication module 21 and the first wireless packet communication network 31 is disconnected.

Upon detection of the disconnection of the line, the line control unit 121 starts the process of transmitting the communication data accumulated in the communication data storage unit 152a to the second communication partner 51. Practically, the connection adapter 1 establishes a connection with the second communication partner 51 according to the setting information 900 stored in the set data storage unit 151a (steps S52 to S57). The connecting process is performed in the procedure of the call issuing process, the LCP process, and the IPCP process as in steps S1 to S8 shown in Figure 5. However, in the sequence shown in Figure 5, the host device 10 is connected to the first wireless packet communication network 31, but it is necessary to note that the connection adapter 1 is connected to the first wireless packet communication network 31. That is, the host device 10 does not relate to the transmitting process to the second communication partner 51 of the replicated data.

When the connection adapter 1 is connected to the second communication partner 51, the communication data accumulated in the communication data storage unit 152a is transmitted to the second communication partner 51 (step S58).

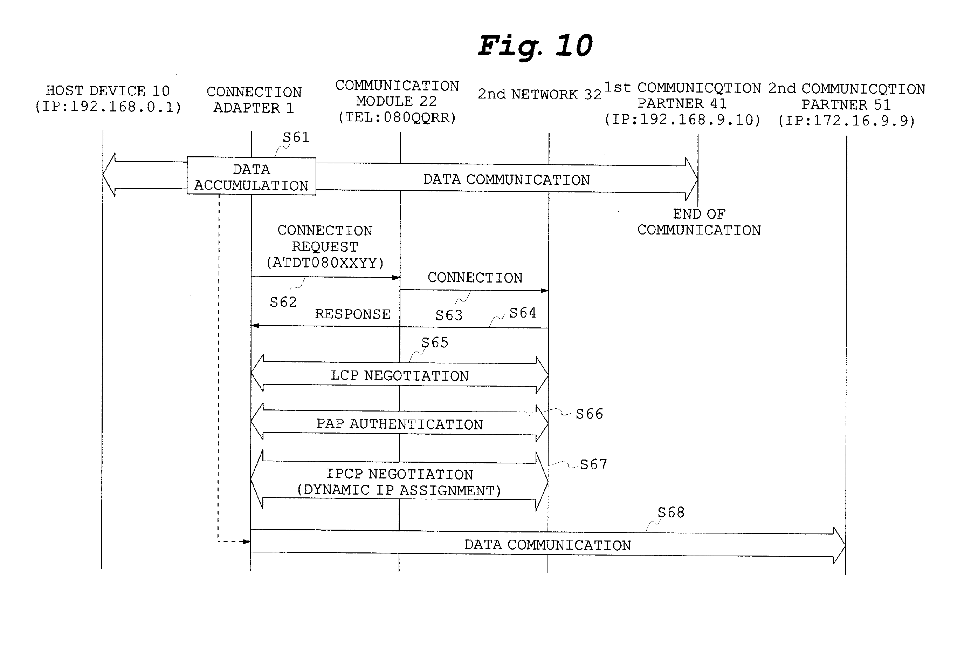

Next, the case in which the replica of the communication data is transmitted to the second communication partner 51 after the communication between the host device 10 and the first communication partner 41 with reference to Figures 6 to 8 is described below with reference to the sequence chart shown in Figure 10.

The communication control unit 122 of the connection adapter 1 accumulates the communication data in the communication data storage unit 152a (step S61) while relaying the communication data between the host device 10 and the first communication partner 41 (step S49 shown in Figure 7).

Assume that the communication between the host device 10 and the first communication partner 41 has been terminated. The completion disconnects the line between the communication module 21 and the first wireless packet communication network 31.

Upon detection of the disconnection of the line, the line control unit 121 starts the process of transmitting the communication data accumulated in the communication data storage unit 152a to the second communication partner 51. Practically, the connection adapter 1 establishes a connection with the second communication partner 51 according to the setting information 911 stored in the set data storage unit 151a (steps S62 to S67). The connecting process is performed in the procedure of the call issuing process, the LCP process, the PAP authenticating process, and the IPCP process as in the sequence shown in Figure 6.

Upon connection to the second communication partner 51, the connection adapter 1 transmits the communication data accumulated in the communication data storage unit 152a to the second communication partner 51 (step S68). In the sequence shown in Figure 7, the connection adapter 1 performs the process of converting an IP address during data communication, but the converting process is not required in the process of transmitting replicated data to the second communication partner 51 because the connection adapter 1 itself communicates with the second communication partner 51 in the process transmitting the replicated data. Therefore, it is not necessary to perform a converting process by the relay device corresponding to the connection point between the second wireless packet communication network 32 and the in-house LAN 50.

In the above-mentioned steps S58 and S68, the communication data to be transmitted to the second communication partner 51 can be all or a part of the communication data between the first communication partner 41 and the host device 10. For example, only the communication data in the direction of the first communication partner 41 from the host device 10 can be transmitted to the second communication partner 51.

Thus, when only a part of the communication data is transmitted, only the data to be transmitted in steps S51 and S61 can be stored in the communication data storage unit 152a. In addition, all communication data is accumulated and only specific data can be transmitted during transmission in steps S58 and S68.

In addition, the communication data to be transmitted to the second communication partner 51 can be the communication data in one or a plurality of layers depending on the use etc. of the communication data. For example, to back up data, only the data in upper layers can be processed. In addition, to analyze a communication log, the data in lower layers together with the data in upper layers can be processed.

As described above, since the connection adapter 1 according to the present embodiment converts, discards, and passes data transmitted between the host device 10 and the communication modules 21, 22, and 23 so that the data can be correctly processed in the respective equipment, various differences in protocol service communication modules 21, 22, and 23, etc. in the wireless packet communication networks 31, 32, and 33 can be absorbed. Thus, the host device 10 designed for the first and third wireless packet communication networks 31 and 33 can be connected to the second wireless packet communication network 32 without reforming or changing the device.

In the present embodiment, after terminating the communication between the host device 10 and the first communication partner 41, the replica of the communication data is transmitted to the second communication partner 51. Thus, since the second communication partner 51 can also manage the communication data, the communication data can be used for backup, a log analysis, etc.

### (Second Embodiment)

The communication equipment connection adapter according to the second embodiment of the present invention is described below with reference to the attached drawings. The main point of the present embodiment different from the first embodiment resides in the mode of the network connection service in the wireless packet communication network 32. The different point in the connection service between the present embodiment and the first embodiment is described below in detail.

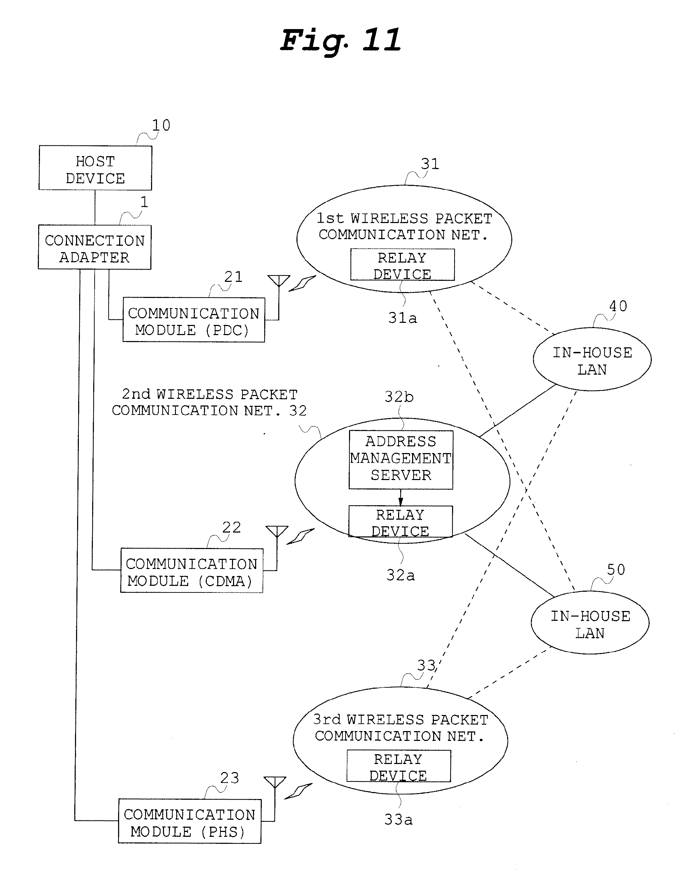

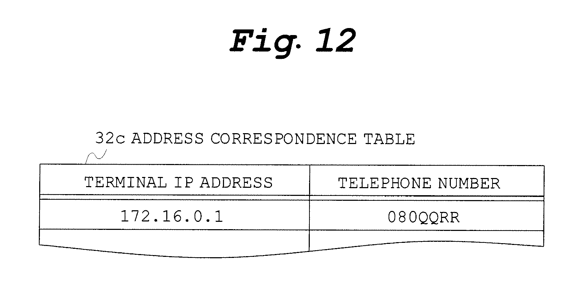

In this connection service, as with the first embodiment, an IP address is assigned to a connection terminal in the dynamic IP assigning technique. However, unlike the first embodiment, the IP address to be assigned to the connection terminal is predetermined. As shown in Figure 11, an address management server 32b is provided in the wireless packet communication network 32. The address management server 32b manages a list of the telephone number of a connection terminal and an IP address distributed to the terminal having the telephone number. Practically, as shown in Figure 12, the address management server 32b is provided with an address correspondence table 32c describing the correspondence between a telephone number and an IP address. The address management server 32b provides a user with an interface so that the address correspondence table 32C can be updated.

In this connection service, the wireless packet communication network 32 acquires the telephone number of the connection terminal when a terminal is connected. Then, the IP address corresponding to the telephone number is acquired from the address correspondence table 32c, and distributes the acquired IP address to the connection terminal. An IPCP is used in distributing the address. That is, in the present embodiment, a technique of the IPCP, that is, a technique of dynamically assigning an IP, but a distributed IP address is predetermined.

In the present embodiment, while using the above-mentioned network connection service, the configuration and the operation of the connection destination router 43 and the connection adapter 1 are different from those according to the first embodiment. First, the connection destination router 43 is described below.

In the above-mentioned first embodiment, since the IP address of the connection terminal is not defined, the connection destination router 43 performs an address converting process. However, in the present embodiment, since the IP address of the connection terminal is determined by an address management server 32c, the address converting process is not necessary. Therefore, the connection destination router 43 has to be able to perform a common relaying function. That is, a common router 42 in a presumed communication system described with reference to Figure 5 can be used.

On the other hand, the line control unit 121 of the connection adapter 1 performs line control such as the establishment of a line connection as in the first embodiment. In addition, the communication control unit 122 controls the data communication on the line established by the line control unit 121 as in the first embodiment. However, the line control unit 121 and the communication control unit 122 are different in operation from those in the first embodiment with respect to the above-mentioned network connection service.

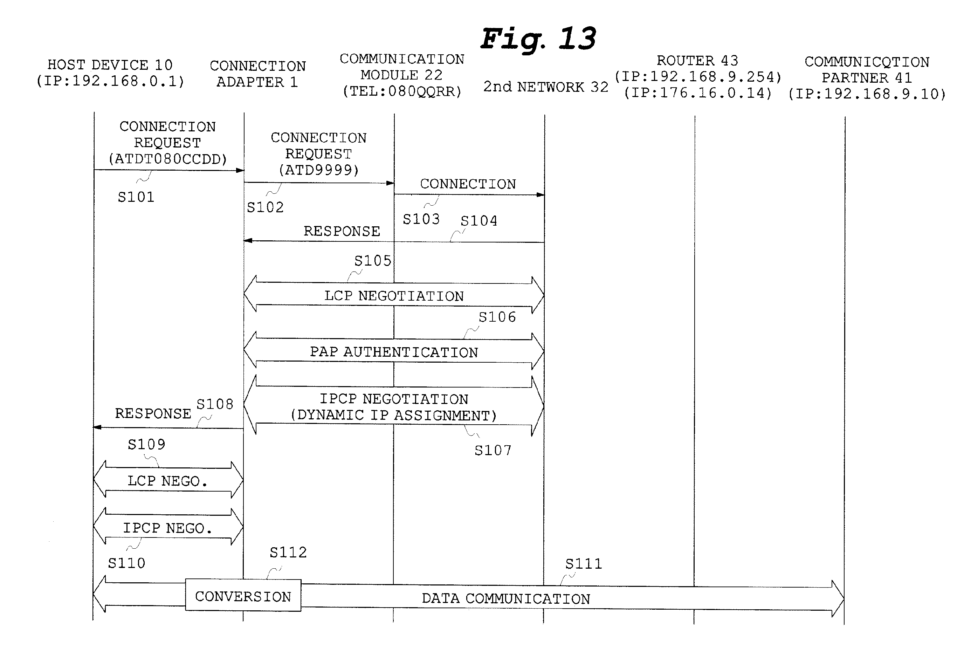

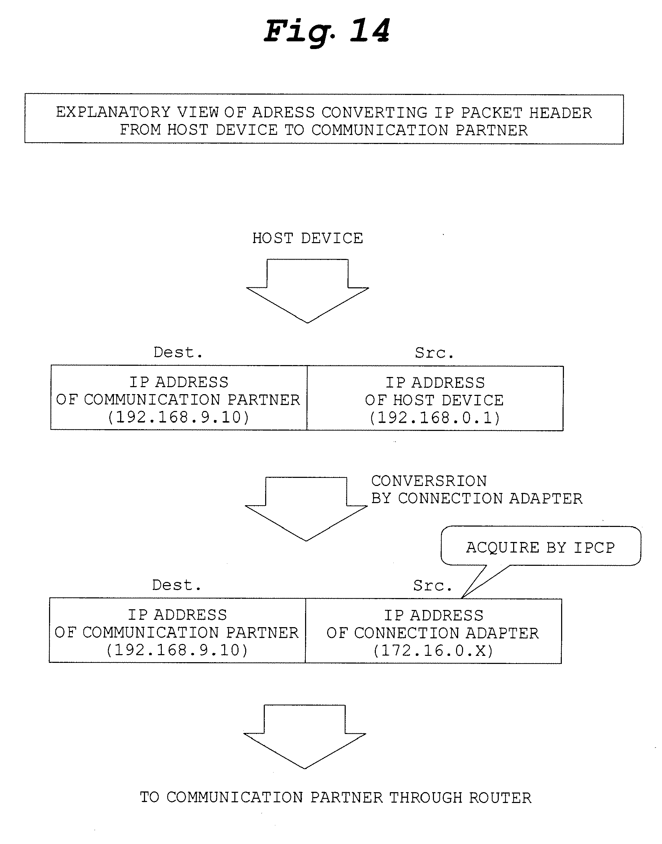

The difference in operation of the connection adapter 1 is described below in detail with reference to Figures 13 and 14. Figure 13 is a sequence chart for the case in which the host device starts communication. Figure 14 is an explanatory view of the process of converting an IP address described in the header of the IP packet transmitted from the host device.

As shown in Figure 13, when the host device 10 issues an 'ATDT080CCDD' command (step S101) to the connection adapter 1, the line control unit 121 of the connection adapter 1 performs a connecting process with the second wireless packet communication network 32 (steps S102 to S107). The process is similar to the process in steps S22 to S27 in the first embodiment described above with reference to Figure 6. However, the only difference is that the IP address assigned by the second wireless packet communication network 32 in step S107 is predetermined in an address management server 32b.

Next, the line control unit 121 of the connection adapter 1 transmits a response 'CONNECT' indicating that the connection has been completed at the line level to the host device 10 (step S108). Upon receipt of the response, the host device 10 starts the LCP negotiation and the IPCP negotiation (steps S109, S110).

Since the connection between the host device 10 and the in-house LAN 40 is completed in the above-mentioned process, the host device 10 starts data communications to the communication partner 41 (step S111). The communication control unit 122 of the connection adapter 1 performs an address conversion on the header of the IP packet (step S112). Practically, as shown in Figure 14, the fixed terminal IP address (192.168.0.1) and the dynamic terminal IP address (172.16.0.X) are mutually converted. In the process above, the communication with the communication partner 41 can be established and started from the host device 10. The replicating process and the transmitting process of the communication data after the communication are similar to those in the first embodiment described above with reference to Figure 9.

The embodiments of the present invention are described above in detail, but the present invention is not limited to these embodiments. In the first embodiment, the connection adapter 1 establishes a network connection for communication with the second communication partner 51 after the network connection established during the communication with the first communication partner 41 is disconnected. In this embodiment, various types of carriers and network contract modes can be adopted. That is, the embodiment excels in the flexibility of system structure. On the other hand, a connection can be made to the second communication partner 51 with the network connection established during the communication with the first communication partner 41 maintained. In this case, the time required to connect a network can be shortened and the communication cost can be reduced.

Also in the above-mentioned embodiment, the PDC standard, the CDMA standard, and the PHS standard are exemplified as communication modules, but other standards can be used in embodying the present invention. Similarly, any other interface standards on the host device side than those listed above can be applied.

Furthermore, in each of the above-mentioned embodiments, an authenticating method, an address system, an address assigning method (assigning a fixed IP address or a dynamic IP address) are exemplified as differences between the network connection service in the first and third wireless packet communication networks 31 and 33 and the network connection service in the second wireless packet communication network 32. However, the present invention can be applied even when a difference is one of them or a combination of them. Furthermore, other differences can be absorbed by the connection adapter as necessary. For example, in the above-mentioned embodiment, a PAP authentication is performed by the second wireless packet communication network 32. However, for example, when a connection is made to a communication network in which a CHAP (challenge handshake authentication protocol) authentication is performed, the CHAP can be implemented to the connection adapter.

Furthermore, in each of the above-mentioned embodiments, the connection adapter 1 can include three communication modules 21, 22, and 23, and each of the wireless packet communication networks 31, 32, and 33 are arbitrarily available, but one of the communication modules 21, 22, and 23 can be included and connected.

## Claims

1. A connection adapter for communication device, comprising:
a first interface for connection to communication equipment for a network connection service;
a second interface for connection to a host device for performing communications using the communication equipment;
a communication control unit for relaying the communications performed by the host device using the communication equipment; and
storage means for storing communication data, wherein:
the communication control unit (a) stores data of the communication between the host device and a first communication partner in the storage means, (b) makes a connection to a second communication partner after the communication between the host device and the first communication partner, and (c) transmits all or a part of the communication data stored in the storage means to the second communication partner.

2. The connection adapter for communication device according to claim 1, wherein
the communication control unit disconnects a network connection established during communication after completion of the communications with the first communication partner, and establishes a network connection for communications with the second communication partner.

3. The connection adapter for communication device according to claim 1, wherein
the communication control unit makes a connection to the second communication partner after the communications with the first communication partner with the network connection established during the communications with the first communication partner maintained.
